# EUROPÄISCHE PATENTSCHRIFT

(11) **EP 2 480 399 B1**
(45) Veröffentlichungstag und Bekanntmachung des Hinweises auf die Patenterteilung: **25.06.2014**
(21) Anmeldenummer: 10754872.9
(22) Anmeldetag: 10.09.2010
(51) Int. Cl.: B29C 70/20, B29C 70/86

(54) **FASERVERBUNDSTRUKTUR**
FIBRE COMPOSITE STRUCTURE
STRUCTURE COMPOSITE RENFORCÉE PAR DES FIBRES

(30) Priorität: 26.09.2009 DE 102009043103
(43) Veröffentlichungstag der Anmeldung: 01.08.2012
(73) Patentinhaber: Bayerische Motoren Werke Aktiengesellschaft, 80809 München (DE); Albert-Ludwigs-Universität Freiburg, 79104 Freiburg (DE)
(72) Erfinder: DULLENKOPF, Dirk, 80807 München (DE); GROSS, Thorsten, 80937 München (DE); KORNPROBST, Wolfgang, 92345 Töging (DE); SPECK, Thomas, 79227 Schallstadt (DE); SPECK, Olga, 79227 Schallstadt (DE); MASSELTER, Tom, 79102 Freiburg (DE); MILWICH, Markus, 72762 Reutingen (DE); NEINHUIS, Christoph, 01069 Dresden (DE)
(86) Internationale Anmeldenummer: PCT/EP2010/005566
(87) Internationale Veröffentlichungsnummer: WO 2011/035860

(56) Entgegenhaltungen:
- EP-A2- 0 167 120
- WO-A1-01/64570
- WO-A1-94/06619
- US-A- 4 460 531
- US-A- 4 650 620

## Beschreibung

Die Erfindung bezieht sich auf eine Faserverbundstruktur, bestehend aus mindestens drei von einer Verzweigungsstelle ausgehenden Faserverbundarmen mit sich jeweils durchgehend unidirektional zwischen benachbarten Faserverbundarmen erstreckenden Randfasersträngen, nach dem Oberbegriff des Patentanspruchs 1.

Eine derartige Faserverbundstruktur, bei der die Faserverbundarme aus Gründen einer erhöhten Lastfestigkeit mit unidirektional durchlaufenden Randfasersträngen versehen sind, ist aus der DE 195 27 197 A1 bekannt. Dabei sind die Unidirektionalfasern jeweils von einer Seite zweier benachbarter Faserverbundarme über einen Kreuzungspunkt und von dort beidseitig des Zentrums der Verzweigungsstelle in den dritten Faserverbundarm geführt. Bei einer Biegebelastung der Faserverbundarme werden die biegeäußeren Randfasem zugbelastet, während die biegeinneren Faserstränge wegen der geringen Faserdruckfestigkeit an der Lastübertragung nahezu unbeteiligt bleiben, wobei an den Umlenkstellen der zugbelasteten Faserstränge im Bereich des Verzweigungszentrums quer zum Faserverlauf gerichtete Kraftvektoren entstehen, die von der umgebenden Matrixbettung aufgenommen werden müssen, mit der Gefahr, dass es an dieser Stelle zu örtlichen Faserverlagerungen oder gar Delaminationserscheinungen kommt.

Die Merkmale des Oberbegriffs Anspruchs 1 sind aus der US-A-4 460 531 bekannt.

Aufgabe der Erfindung ist es, eine Faserverbundstruktur der eingangs genannten Art so auszubilden, dass die gewichtsbezogene Lastfestigkeit und Versagenssicherheit signifikant erhöht werden.

Diese Aufgabe wird erfindungsgemäß durch die im Patentanspruch 1 gekennzeichnete Faserverbundstruktur gelöst.

Erfindungsgemäß werden die unter Zuglast in einem der sich kreuzenden Randfaserstränge an der Umlenkstelle entstehenden Querkräfte auf dem Wege über den druckfesten Innenkern an den jeweils anderen Randfaserstrang übertragen und an diesem durch eine entsprechende Gegenkraft abgestützt. Auf diese Weise übernimmt der beidseitig von Unidirektionalfasern unterschiedlicher Faserverbundarme umlaufene Innenkern eine Doppelfunktion: Zum einen setzt bei einer auf den dritten Faserverbundarm gerichteten Biegebeanspruchung jeweils eines der beiden Faserverbundarme der dann zugbelastete Randfaserstrang aufgrund der Querkraftverkoppelung der Faserstränge an den Umlenkstellen den sonst unbelasteten, korrespondierenden Randfaserstrang des jeweils anderen Faserverbundarms unter Zugspannungen, so dass dieser unter Erhöhung der spezifischen Festigkeit der Faserverbundstruktur in die Lastaufnahme einbezogen wird, und zum anderen wird wegen der Querkraftkompensation über den Innenkern das Risiko von Faserverlagerungen oder sonstigen Desintegrationserscheinungen und eines daraus resultierenden Strukturversagens im kritischen Verzweigungsbereich auf konstruktiv einfache Weise deutlich reduziert.

Nach Anspruch 2 werden in besonders bevorzugter Ausgestaltung der Erfindung auch die sich zwischen voneinander abgewandten Seiten der beiden benachbarten Faserverbundarme durchgehend erstreckenden Unidirektionalfasern an dem Innenkern druckkraftübertragend umgelenkt und so bei einer Biegebeanspruchung der Faserverbundstruktur weitere, an sich zugkraftentlastete Faserstränge von Seiten der dann zugbelasteten Faserstränge auf dem Wege über die Umlenkstellen am Innenkern unter Zugspannung gesetzt und dadurch an der Lastaufnahme beteiligt.

Das Prinzip der Einbeziehung an sich nicht zugbelasteter Faserstränge in die Lastaufnahme wird erfindungsgemäß durch eine Doppelumlenkung mittels eines zweiten, dem ersten nachgelagerten Innenkerns noch wirksamer genutzt, wobei die den zweiten Innenkern umlaufenden Faserstränge zusätzlich auch am ersten Innenkern oberhalb ihres Kreuzungspunktes druckkraftübertragend umgelenkt sein können, so dass sämtliche Randfaserstränge bei einer Belastung der Faserverbundstruktur weitgehend gleichermaßen zugkraftbeaufschlagt sind und so die Belastung mittragen.

Nach Anspruch 4 sind die Faserverbundarme vorzugsweise mindestens im Verzweigungsbereich mit einer zusätzlichen Versagenssperre in Form einer die unidirektionalen Faserstränge umschließenden, multidirektionalen Faserver-bundumhüllung versehen, und ferner ist, wie nach Anspruch 5 bevorzugt, im Verzweigungsbereich der Faserverbundarme eine die Faserstränge umgebende Druckbandage mit einer in Umfangsrichtung verlaufenden Faserorientierung aufgebracht, um sicherzustellen, dass sich nicht, beginnend an den konturseitigen Verzweigungspunkten der Faserverbundarme, Außenfasem unter Last von der Faserverbundstruktur lösen können.

Anstatt in einer Ebene können die Faserverbundarme auch, wie in Anspruch 6 angegeben, in dreidimensional unterschiedlichen Richtungen verlaufen, wobei in diesem Fall der bzw. die druckkraftübertragenden Innenkerne vorzugsweise kugelförmig gestaltet sind.

Nach Anspruch 7 schließlich besteht ein besonders bevorzugter Anwendungsfall der Erfindung in der Ausbildung der Faserverbundstruktur als vierarmiger Knotenpunkt eines Kraftfahrzeug-Hinterachsträgers.

Die Erfindung wird nunmehr anhand mehrerer Ausführungsbeispiele in Verbindung mit den Zeichnungen näher erläutert. Es zeigen in stark schematisierter Darstellung:
- **Fig. 1**: eine dreiarmige Faserverbundstruktur;
- **Fig. 2**: eine der Fig.1 entsprechende Darstellung einer erfindungsgemäßen Faserverbundstruktur; und
- **Fig.3**: eine perspektivische Darstellung eines Kraftfahrzeug-Hinterachsträgers mit vierarmigen, jeweils als Faserverbundstruktur nach der Erfindung gestalteten Knotenpunkten.

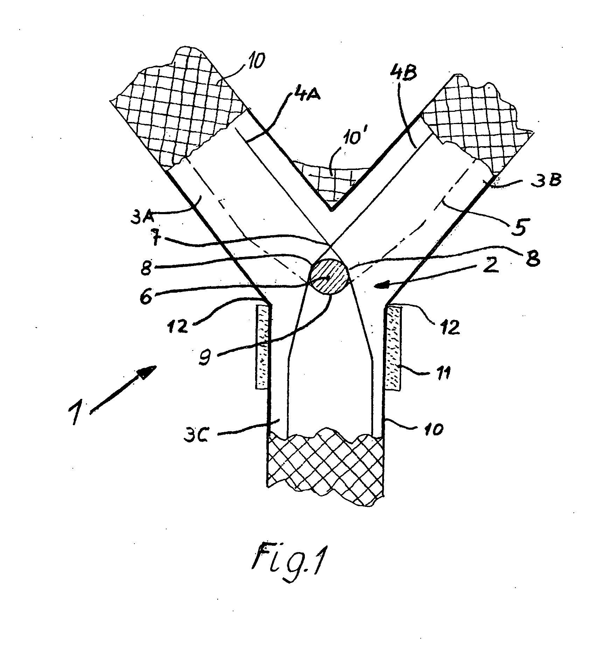

Die in Fig. 1 gezeigte Faserverbundstruktur 1 besteht aus drei, von einer gemeinsamen Verzweigungsstelle 2 ausgehenden Faserverbundarmen 3A, 3B und 3C, die von durchlaufenden, in eine vergleichsweise weiche Kunststoffmatrix eingebetteten, zugfesten Unidirektionalfasern durchzogen sind, von denen in Fig.1 lediglich die Randfaserstränge 4A und 4B, welche sich von jeweils einander zugekehrten Seiten der Faserverbundarme 3A bzw. 3B durchlaufend in den dritten Faserverbundarm 3C erstrecken, sowie ein zwischen den voneinander abgekehrten Seiten der beiden Faserverbundarme 3A, 3B verlaufender Randfaserstrang 5 dargestellt sind.

Im Zentrum der Verzweigungsstelle 2 ist ein druckfester, rollenförmiger Innenkern 6 angeordnet, den die Randfaserstränge 4A und 4B auf dem Wege über einen Kreuzungspunkt 7 an einer dem zugeordneten Faserverbundarm 3A bzw. 3B abgekehrten Umlenkstelle 8 druckkraftübertragend umlaufen. Ebenso wird der sich zwischen den beiden Faserverbundarmen 3A und 3B erstreckende Unidirektionalstrang 5 druckkraftübertragend an dem dem dritten Faserverbundarm 3C zugekehrten Randbereich 9 des Innenkerns 6 umgelenkt. Der Innenkern 6 ist derart in die Faserverbundstruktur eingebettet, dass er bei einer Zugbeanspruchung irgendeines der Randfaserstränge 4a, 4B oder 5, z. B. des Randfaserstrangs 4A, an dessen Umlenkstelle 8 druckbeaufschlagt wird und die Druckkraft an die jeweils anderen Randfaserstränge, also z. B die Randfaserstränge 4B und 5, in Form von quer zur Faserrichtung verlaufenden Kraftvektoren überträgt, so dass diese ebenfalls unter Zugspannung gesetzt werden und die Belastung der Faserverbundstruktur 1 mittragen, mit dem Ergebnis, dass sich die spezifische Lastfestigkeit und Versagenssicherheit der Faserverbundstruktur 1 deutlich erhöht.

Zusätzlich sind die Faserverbundarme 3 zumindest im Verzweigungsbereich 2 mit einer multidirektionalen Faserverbundumhüllung 10 versehen, die eine weitere Versagenssperre bildet und, wie bei 10' gezeigt, die beiden spitzwinklig zueinander verlaufenden Faserverbundarme 3A und 3B im Bereich der Astgabel überbrückt.

Der dritte, den Hauptast der Verzweigungsstelle 2 bildende Faserbundarm 3C ist an seinem verzweigungsseitigen Ende außerdem von einer Druckbandage 11 mit einer in Umfangsrichtung verlaufenden Faserorientierung umschlossen, um zu verhindern, dass sich außenliegende Fasern unter Zuglast in diesem - in Fig. 1 als Knickstelle 12 dargestellten - Bereich von der Faserverbundstruktur 1 ablösen.

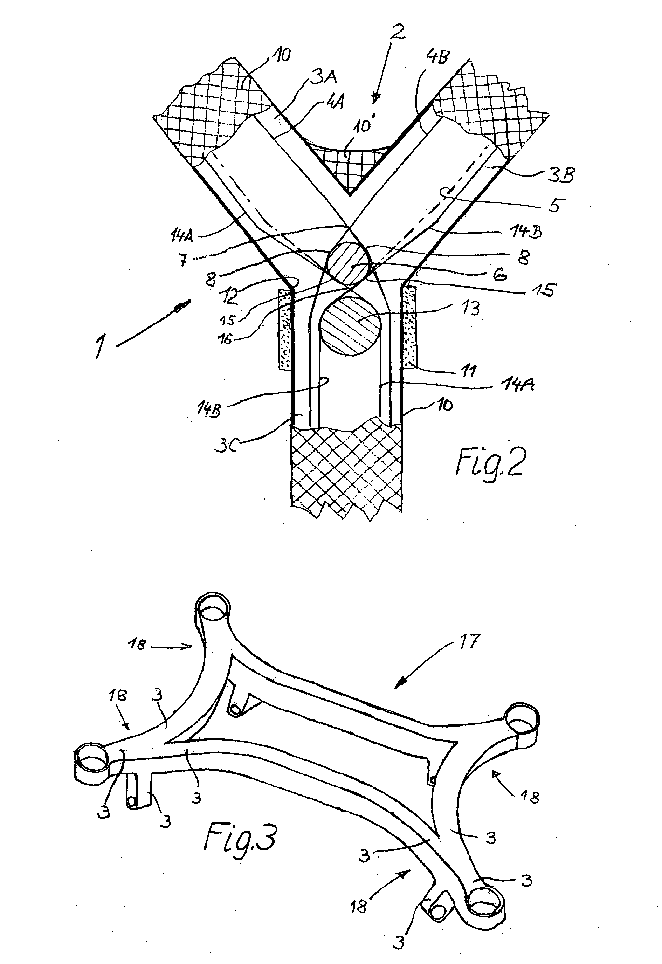

Die erfindungsgemäße Faserverbundstruktur nach Fig. 2, wo die dem obigen Ausführungsbeispiel entsprechenden Komponenten durch das gleiche Bezugszeichen gekennzeichnet sind, unterscheidet sich von diesem in erster Linie dadurch, dass im Verzweigungsbereich 2 ein zweiter, druckrollenartiger Innenkern 13 dem ersten in Richtung des dritten Faserverbundarms 3C nachgeordnet ist, welcher beidseitig von zwei weiteren unidirektionalen Randfasersträngen 14a und 14B umlaufen wird, die jeweils von einander abgewandten Seiten der beiden Faserverbundarme 3A bzw. 3B über eine Umlenkstelle 15 auf der Unterseite des ersten Innenkerns 6 und einen Kreuzungspunkt 16 druckkraftübertragend am zweiten Innenkern 13 entlang und von dort in den dritten Faserverbundarm 3C verlaufen. Auf diese Weise wird das Prinzip der Einbeziehung an sich nicht zugbelasteter Unidirektionalstränge in die Lastaufnahme noch wirksamer umgesetzt. So wird z. B. bei einer Zugbelastung des Faserstrangs 14A oder 14B nicht nur der korrespondierende Gegenstrang 14B bzw. 14A über den Innenkern 13 unter Zugspannung gesetzt, sondern zugleich an den Umlenkstellen 15 der Faserstränge 14a und 14b am ersten Innenkern 6 auch eine Querkraft auf diesen und dadurch auf die anderen Faserstränge 4a und 4B ausgeübt, so dass diese ebenfalls zugverspannt und folglich an der Lastaufnahme beteiligt werden, und umgekehrt werden bei einer Zugbelastung des oder der Randfaserstränge 4A oder 4B auch die Randfasersträngen 14a und 14B mitverspannt. Im Übrigen ist die Bau- und Funktionsweise der Faserverbundstruktur nach Fig. 2 die gleiche wie bei dem ersten Ausführungsbeispiel.

Im Rahmen der Erfindung sind zahlreiche Abwandlungen möglich. So kann die Faserverbundstruktur 1 anstelle der gezeigten Y-Verzweigung 2 auch andere Bauformen und mehr als drei Faserverbundarme 3 aufweisen. Ferner lässt sich durch eine wechselweise Übertragung des Faserverlaufs zwischen den einzelnen Faserverbundarmen 3 erreichen, dass sämtliche Faserverbundarme 3 die gleiche Faserstruktur besitzen.

Die Erfindung bietet eine Vielzahl von Anwendungsmöglichkeiten. Fig. 3 zeigt einen besonders bevorzugten Anwendungsfall in Form eines Kraftfahrzeug-Hinterachsträgers 17 in Faserverbundbauweise, welcher an den Knotenpunkten 18 jeweils als erfindungsgemäß gestaltete, vierarmige Faserverbundstruktur ausgebildet ist. Da die Faserverbundarme 3 an den jeweiligen Knotenpunkten 18 in dreidimensional unterschiedlichen Richtungen verlaufen, sind der bzw. die - in Fig. 3 nicht sichtbaren - Innenkerne nicht zylinder-, sondern kugelförmig ausgebildet.

## Patentansprüche

1. Faserverbundstruktur, bestehend aus mindestens drei von einer Verzweigungsstelle (2) ausgehenden Faserverbundarmen (3) mit sich jeweils unidirektional von einander zugekehrten Seiten zweier benachbarter Faserverbundarme (3A, 3B) über einen im Bereich der Verzweigungsstelle gelegenen Kreuzungspunkt (7) durchgehend in den dritten Faserverbundarm (3C) erstreckenden Randfasersträngen (4A, 4B), wobei im Bereich der Verzweigungsstelle (2) mindestens ein druckfester, dem Kreuzungspunkt (7) nachgeschalteter Innenkern (6) angeordnet und dieser beidseitig von den Randfasersträngen (4A, 4B) quer zur Faserrichtung druckkraftübertragend umlaufen **gekennzeichnet dadurch, dass** und dem Innenkern (6) nachgelagert ein weiterer Kreuzungspunkt (16) und diesem nachgeordnet ein zweiter, druckfester Innenkern (13) angeordnet ist, an dem an einander abgewandten Randzonen der beiden Faserverbundarme (3A, 3B) über den weiteren Kreuzungspunkt (16) verlaufende Unidirektionalfasern (14A, 14B) beidseitig quer zur Faserrichtung druckkraftübertragend entlang- und durchgehend in den dritten Faserverbundarm (3C) fortgeführt sind.

2. Faserverbundstruktur nach Anspruch 1, **dadurch gekennzeichnet, dass** die Unidirektionalfasern (14A, 14B) oberhalb des weiteren Kreuzungspunktes (16) zusätzlich auch den ersten Innenkern (6) auf dessen dem dritten Faserverbundarm (3C) zugewandten Seiten (15) quer zur Faserrichtung druckkraftübertragend umlaufen.

3. Faserverbundstruktur nach Anspruch 1 oder 2, **dadurch gekennzeichnet, dass**
der Innenkern (6) auf der dem Kreuzungspunkt (7) der Randfaserstränge (4A, 4B) gegenüberliegenden Seite (9) von sich durchgehend zwischen den voneinander abgewandten Randbereichen der beiden benachbarten Faserverbundarme (3A, 3B) erstreckenden Unidirektionalfasern (5) quer zur Faserrichtung kraftübertragend umlaufen ist.

4. Faserverbundstruktur nach einem der vorhergehenden Ansprüche, **dadurch gekennzeichnet, dass**
die Faserverbundarme (3) mindestens im Verzweigungsbereich (2) mit einer die Unidirektionalfasern umschließenden, multidirektionalen Faserverbundumhüllung (10) versehen sind.

5. Faserverbundstruktur nach einem der vorhergehenden Ansprüche, **dadurch gekennzeichnet, dass**
im Verzweigungsbereich (2) mindestens eines der Faserverbundarme (3) eine die Unidirektionalfasern umschließende Druckbandage (11) mit einer in Umfangsrichtung verlaufenden Faserorientierung aufgebracht ist.

6. Faserverbundstruktur nach einem der vorhergehenden Ansprüche, **dadurch gekennzeichnet, dass**
die Faserverbundarme (3) in dreidimensional unterschiedlichen Richtungen verlaufen und der bzw. die Innenkerne (6, 13) kugelförmig gestaltet sind.

7. Faserverbundstruktur nach einem der vorhergehenden Ansprüche, **gekennzeichnet durch**
Ausbildung als Hinterachsträger (17) mit vierarmigen Knotenpunkten (18).

## Claims

1. A composite fibre structure comprising at least three composite fibre arms (3) extending from a junction (2), in each case with edge fibre strings (4A, 4B) extending continuously into the third composite fibre arm (3C) unidirectionally from facing sides of two neighbouring composite fibre arms (3A, 3B) over an intersection (7) at the junction (2), wherein at least one pressure-resistant inner core (6) is disposed downstream of the intersection (7) and is surrounded on both sides by the edge fibre strings (4A, 4B) transmitting compressive force transversely of the direction of the fibres, **characterised in that** and an additional intersection (16) is disposed downstream of the inner core (6) and downstream thereof a second pressure-resistant inner core (13) is disposed, at which unidirectional fibres (14A, 14B) extending on opposite edge zones of the two composite fibre arms (3A, 3B) over the other junction (16) continue on both sides transversely of the direction of fibres, transmitting compressive force along and continuously into the third composite fibre arm (3C).

2. A composite fibre structure according to claim 1, **characterised in that** over the additional intersection (16) the unidirectional fibres (14A, 14B) also extend round the first inner core (6) on its sides (15) facing the third composite fibre arm (3C), transmitting compressive force transversely of the direction of the fibres.

3. A composite fibre structure according to claim 1 or claim 2, **characterised in that**
on the side (9) opposite the intersection (7) between the edge fibre strings (4A, 4B) the inner core (6) is surrounded by unidirectional fibres (4) extending continuously between the opposite edge regions of the two neighbouring composite fibre arms (3A, 3B), transmitting force transversely of the direction of the fibres.

4. A composite fibre structure according to any of the preceding claims, **characterised in that**
the composite fibre arms (3), at least in the junction region (2) are provided with a multi-directional composite fibre covering (10) surrounding the unidirectional fibres.

5. A composite fibre structure according to any of the preceding claims, **characterised in that**
in the junction area (2) of at least one of the composite fibre arms (3), a pressure bandage (11) surrounding the unidirectional fibres is deposited, with the fibres oriented in the peripheral direction.

6. A composite fibre structure according to any of the preceding claims, **characterised in that**
the composite fibre arms (3) extend in different directions in three dimensions and the inner core or cores (6, 13) are spherical.

7. A composite fibre structure according to any of the preceding claims, **characterised by**
being constructed in the form of a rear axle holder (17) with four-armed junction points (18).

## Revendications

1. Structure de composite renforcé par des fibres constituée d'au moins trois branches de composite renforcé par des fibres (3) partant d'un emplacement de ramification (2) comportant des cordons de fibres de latéraux (4A, 4B) s'étendant respectivement dans une direction à partir des côtés tournés l'un vers l'autre de deux branches de composite renforcé par des fibres (3A, 3B), sans interruption dans la troisième branche de composite renforcé par des fibres (3C) en passant par un point d'intersection (7) situé dans la zone de l'emplacement de ramification, structure dans laquelle, dans la zone de l'emplacement de ramification (2) est disposé au moins un noyau interne (6) résistant à la pression situé en aval du point d'intersection (7), et celui-ci est entouré de chaque côté par les cordons de fibres latéraux (4A, 4B), de façon à transmettre les forces de pression transversalement à la direction des fibres,
**caractérisée en ce qu'**
il est prévu en aval du noyau interne (6) un autre point d'intersection (16), et en aval de ce point d'intersection un second noyau interne (13) résistant à la pression, au niveau duquel des fibres unidirectionnelles (14A, 14B) s'étendant dans les zones latérales situées à l'opposé l'une de l'autre des deux branches de composite renforcé par des fibres (3A, 3B) se prolongent sans interruption en passant par l'autre point d'intersection (16) de chaque côté dans la troisième branche de composite renforcé par des fibres (3C) le long de cette branche en transmettant les forces de pression transversalement à la direction des fibres.

2. Structure de composite renforcé par des fibres conforme à la revendication 1,
**caractérisée en ce que**
les fibres unidirectionnelles (14A, 14B) entourent également de façon à transmettre les forces de pression transversalement à la direction des fibres, le premier noyau interne (6) au-dessus de l'autre point de croisement (16) sur ses faces (15) tournées vers la troisième branche de composite renforcé par des fibres (3C).

3. Structure de composite à base de fibres conforme à la revendication 1 ou 2,
**caractérisée en ce que**
le noyau interne (6) est entouré sur sa face (9) située à l'opposé du point d'intersection (7) des cordons de fibres latéraux (4A, 4B) par des fibres unidirectionnelles (5) s'étendant sans interruption entre les zones latérales situées à l'opposé l'une de l'autre des deux branches de composite renforcé par des fibres (3A, 3B) voisines, de façon à transmettre les forces de pression transversalement à la direction des fibres.

4. Structure de composite renforcé par des fibres conforme à l'une des revendications précédentes,
**caractérisée en ce que**
les branches de composite renforcé par des fibres (3) sont équipées, au moins dans la zone de ramification (2) d'une enveloppe de composite renforcé par des fibres (10) multidirectionnelle comprenant les fibres unidirectionnelles.

5. Structure de composite renforcé par des fibres conforme à l'une des revendications précédentes,
**caractérisée en ce que**
dans la zone de ramification (2) d'au moins l'une des branches de composite renforcé par des fibres (3) est appliqué un bandage de compression (11) renfermant les fibres unidirectionnelles avec une orientation de fibres s'étendant dans la direction périphérique.

6. Structure de composite renforcé par des fibres conforme à l'une des revendications précédentes,
**caractérisée en ce que**
les branches de composite renforcé par des fibres (3) s'étendent dans des directions tridimensionnelles différentes et le ou les noyau(x) interne(s) (6, 13) a (ont) une configuration sphérique.

7. Structure de composite renforcé par des fibres conforme à l'une des revendications précédentes,
**caractérisée par**
une réalisation entant que support d'essieu arrière (17) avec des points de noeud (18) à quatre branches.
